# FASCICULE DE BREVET EUROPEEN

(11) **EP 1 405 689 B1**
(45) Date de publication et mention de la délivrance du brevet: **28.03.2007**
(21) Numéro de dépôt: 03292391.4
(22) Date de dépôt: 29.09.2003
(51) Int. Cl.: B23P 9/02, F16J 10/04

(54) **Dispositif de formation d'empreintes en creux sur une surface d'une pièce**
Vorrichtung zum Prägen von Einformungen auf der Oberfläche eines Teiles
Device for forming indentations on the surface of a part

(30) Priorité: 03.10.2002 FR 0212272
(43) Date de publication de la demande: 07.04.2004
(73) Titulaire: Peugeot Citroen Automobiles SA, 78943 Vélizy-Villacoublay Cedex (FR)
(72) Inventeur: Heslon, Christophe, 91270 Vigneux sur Seine (FR); Bourreau, Emmanuel, 78150 Le Chesnay (FR)
(74) Mandataire: Lanceplaine, Jean-Claude

(56) Documents cités:
- EP-A- 0 415 215
- DE-A- 19 810 265
- GB-A- 659 313
- GB-A- 1 318 631
- US-A- 1 707 400
- US-B1- 6 253 724

## Description

La présente invention concerne un dispositif de formation d'empreintes en creux de faible profondeur sur une surface d'une pièce (voir par exemple EP 0415215), comme par exemple un alésage d'une chemise d'un cylindre d'un moteur à combustion.

Les constructeurs automobiles cherchent de plus en plus à réduire les émissions polluantes des véhicules automobiles et à augmenter le rendement des moteurs à combustion interne.

Un axe de recherche dans ce domaine consiste à diminuer, d'une part, la consommation en ville et, d'autre part, les pertes mécaniques qui sont dues aux frottements des pistons sur la paroi des alésages des cylindres.

Des études ont montré qu'en plus du rodage classique, le fait de réaliser des empreintes en creux sur ces parois permet de répondre à ces objectifs. Les empreintes en creux ainsi formées sont de dimensions, de formes précises et réparties sur la surface de manière définie.

Mais, ces techniques présentent des inconvénients car elles nécessitent une infrastructure importante et, de ce fait, elles sont donc complexes à mettre en oeuvre ce qui entraîne une augmentation importante du coût d'un tel usinage.

L'invention a pour but d'éviter ces inconvénients en proposant un dispositif de formation d'empreintes en creux de faible profondeur simple à mettre en oeuvre, à moindre coût et dans des temps de cycle performants et compatibles avec une production de moteurs en grande série.

L'invention a donc pour objet un dispositif de formation d'empreintes en creux de faible profondeur sur une surface d'une pièce, caractérisé en ce qu'il comprend un outil cylindrique formé par un corps comportant :
- un cylindre de référence destiné à être appliqué sur la surface,
- une couronne coaxiale audit cylindre et munie, sur sa face externe, d'une série d'éléments en saillie comprenant chacun une partie active de forme complémentaire aux empreintes en creux, et
- un organe de liaison avec des moyens de déplacement de l'outil le long de la surface, des moyens d'entraînement en rotation de cet outil et des moyens de déplacement vertical dudit outil.

Selon d'autres caractéristiques de l'invention :
- la couronne est solidaire du corps de l'outil,
- la couronne est indépendante du corps et est montée libre en rotation sur ledit corps,
- les éléments en saillie forment avec la couronne une pièce monobloc,
- les éléments en saillie sont formés par des plaquettes amovibles et indépendantes de la couronne et disposées chacune dans un logement ménagé dans ladite couronne,
- chaque plaquette est déplaçable radialement dans le logement correspondant au moyen d'un système de réglage,
- les éléments en saillie sont fixés sur la face externe de la couronne par exemple par soudage ou par brasage,
- la couronne est expansible radialement à l'aide d'un mécanisme comportant un cône concentrique à ladite couronne et déplaçable verticalement par un système vis/écrou,
- les éléments en saillie sont uniformément répartis à la périphérie de la couronne,
- la couronne et/ou les éléments en saillie sont réalisés en acier rapide ou en carbure de tungstène ou en céramique ou en nitrure de bore ou en diamant,
- les moyens de déplacement et d'entraînement en rotation de l'outil comprennent une broche d'une machine outil reliée à l'organe de liaison du corps de cet outil,
- la surface de la pièce est formée par un alésage d'une chemise d'un cylindre d'un moteur à combustion,
- les empreintes en creux formées par la partie active des éléments en saillie ont une profondeur comprise entre 10 et 15 microns ± 10%.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'un outil d'un dispositif conforme à l'invention,
- la Fig. 2 est une vue schématique en perspective et à plus grande échelle de plusieurs éléments en saillie de l'outil de la Fig. 1,
- la Fig. 3 est une vue schématique en perspective d'une première variante de l'outil du dispositif,
- la Fig. 4 est une vue schématique en perspective d'une seconde variante de l'outil du dispositif,
- la Fig. 5 est un schéma montrant les déplacements de l'outil du dispositif,
- les Figs. 6A et 6B sont des schémas de deux exemples de répartition des empreintes en creux sur une surface et réalisées par le dispositif de formation selon l'invention.

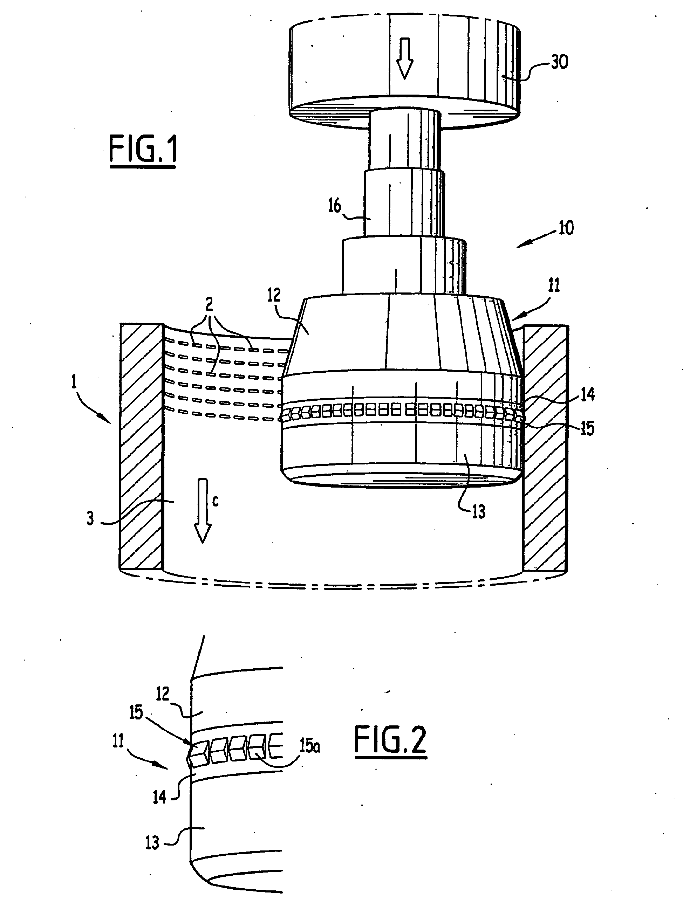

Sur la Fig. 1, on a représenté schématiquement un dispositif de formation désigné dans son ensemble par la référence 10 et qui est destiné à former des empreintes en creux 2 de faible profondeur sur une surface 3 d'une pièce 1.

Dans l'exemple de réalisation représenté sur la Fig. 1, la surface 3 est constituée d'une surface interne d'un cylindre, comme par exemple un alésage d'une chemise d'un cylindre d'un moteur à combustion.

D'une manière générale, le dispositif de formation 10 est destiné à former les empreintes en creux de faible profondeur sur tout type de pièces de forme quelconque, comme par exemple cylindrique ou plane et réalisées dans des matériaux divers.

Ainsi que représenté à la Fig. 1, le dispositif 10 comprend un outil 11 formé par un corps 12 supportant, d'une part, un cylindre de référence 13 et, d'autre part, une couronne 14 coaxiale audit cylindre.

Le cylindre de référence 13 est destiné à être appliqué sur la surface 3 de la pièce 1, comme représenté à la Fig. 1, et la couronne 14 est munie, sur sa face externe, d'une série d'éléments en saillie 15 comprenant chacun une surface active 15a de forme complémentaire aux empreintes 2 à réaliser sur ladite surface 3.

Le corps 12 comporte également un organe de liaison 16 avec des moyens de déplacement de l'outil 11 le long de la surface 3, des moyens d'entraînement en rotation de cet outil et des moyens de déplacement vertical dudit outil.

De préférence, les moyens de déplacement de l'outil 11 et d'entraînement en rotation de cet outil 11 sont constitués par une broche 30 d'une machine outil et qui vient s'engager sur l'organe de liaison 16.

La couronne 14 est soit solidaire du corps 12 de l'outil 11 et dans ce cas cette couronne 14 est entraînée en rotation avec le corps 12 par l'intermédiaire de la broche 30, soit indépendante de ce corps 12 et montée libre en rotation sur ce dernier. Dans ce cas, un roulement, non représenté, est fixé entre le corps 12 et la couronne 14 si bien qu'elle est entraînée en rotation par la friction entre les éléments en saillie 15 et la surface 3.

Selon un premier mode de réalisation représenté à la Fig. 2, les éléments en saillie 15 forment une pièce monobloc avec la couronne 14. Pour cela, la face externe de la couronne 14 est usinée pour que les parties actives 15a des éléments en saillie 15 forment un relief inverse de celui des empreintes 2 à obtenir sur la surface 3 de la pièce1.

La dureté du matériau de la couronne 14 est suffisante pour imprimer les empreintes 2 sur la surface 3 sans se détériorer.

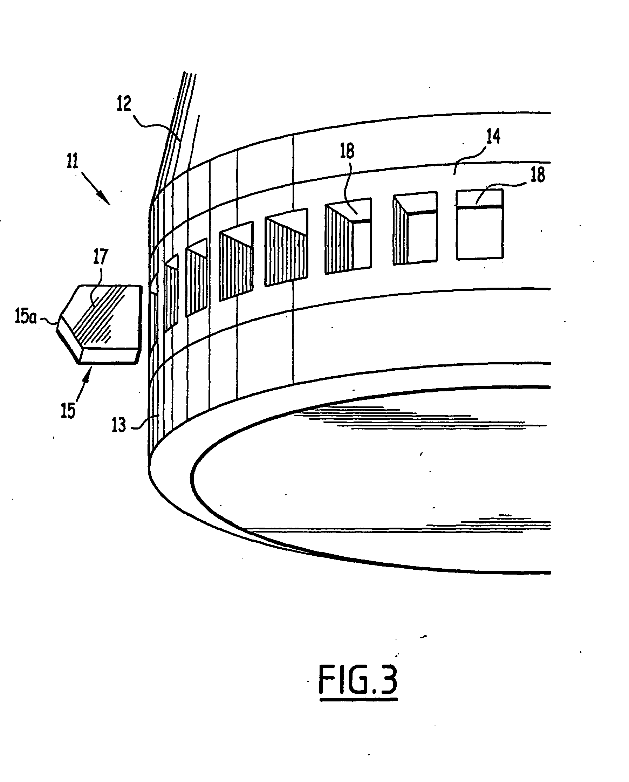

Selon un second mode de réalisation représenté à la Fig. 3, les éléments en saillie 15 sont formés par des plaquettes 17 amovibles et indépendantes de la couronne 14 et qui comportent chacune une partie active 15a de relief inverse à celui des empreintes 2 à obtenir sur la surface 3.

Chaque plaquette 17 est disposée dans un logement 18 ménagé dans la couronne 14 et chaque logement 18 est pourvu d'un système de réglage, non représenté, permettant de déplacer radialement la plaquette 17 correspondante de façon à compenser l'usure de la partie active 15a.

Le système de réglage est constitué par exemple par un système à vis de type classique.

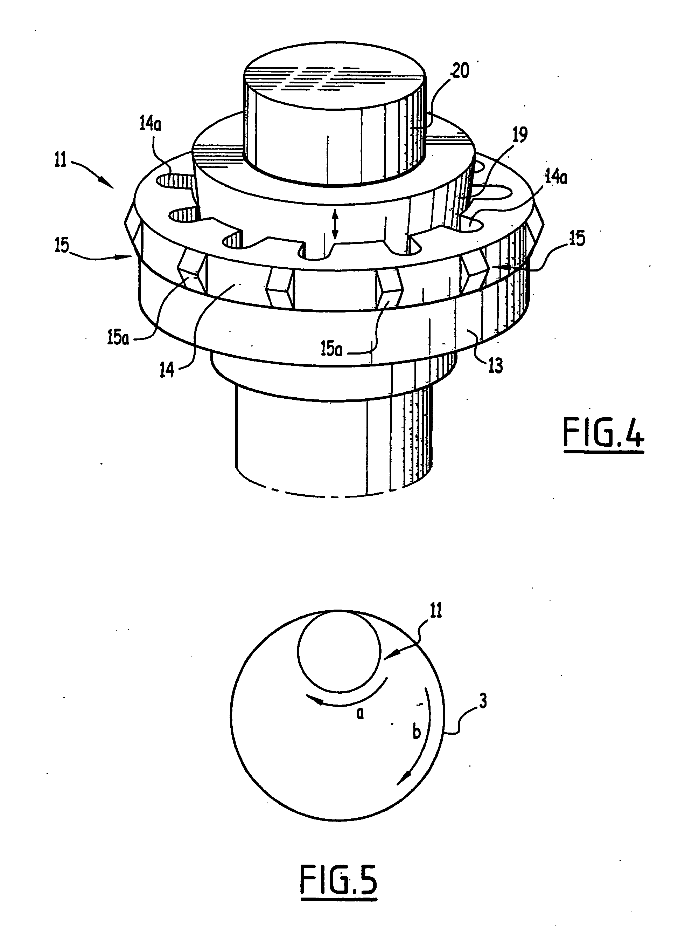

Selon un troisième mode de réalisation représenté à la Fig. 4, les éléments en saillie 15 sont fixés sur la couronne 14 par exemple par soudage ou par brasage et cette couronne 14 est expansible radialement à l'aide d'un mécanisme approprié.

Pour cela, la couronne 14 est réalisée en un matériau permettant son expansion radiale et elle comporte des évidements 14a.

Le mécanisme d'expansion radiale de la couronne 14 comprend un cône 19 concentrique à ladite couronne 14 et qui est déplaçable verticalement par un système vis/écrou désigné par la référence générale 20.

La rotation du mécanisme vis/écrou 20 permet de déplacer verticalement le cône 19 et de ce fait d'obtenir une expansion de la couronne 14 nécessaire au réglage radial des éléments en saillie 15 pour maîtriser la profondeur des empreintes 2 réalisées sur la surface 3. En effet, une usure de la partie active 15a des éléments en saillie 15 nécessite un affûtage. Il en résulte donc un enlèvement de matière qu'il faut compenser par une augmentation du diamètre primitif de la couronne 14.

Dans le cas où la couronne 14 et les éléments en saillie 15 forment une seule pièce monobloc, cet ensemble est réalisé par exemple en acier rapide ou en carbure de tungstène ou en céramique en en nitrure de bore ou encore en diamant. Dans le cas où les éléments en saillie 15 sont indépendants de la couronne 14, ils sont réalisés dans l'un de ces matériaux. Ces matériaux peuvent aussi être revêtus par un procédé de revêtement sous vide par exemple par un matériau plus dur et/ou possédant une coefficient de frottement différent.

Le cylindre de référence 13 est usiné avec précision et il a deux fonctions. La première fonction réside dans le fait qu'il fait office de référence pour le réglage de la couronne 14 en diamètre. En effet, le relief extérieur de la couronne 14 est usiné dans le cas d'une pièce monobloc ou réglé radialement par rapport à ce cylindre 13 dans le cas d'éléments en saillie 15 indépendants de la couronne 14.

La seconde fonction réside dans le fait que ce cylindre 13 fait office de référence pour le parcours de l'outil 11 sur la surface 3 de la pièce 2. En effet, bien que cette surface 3 ne soit pas géométriquement parfaite et que le déplacement de la broche 30 de la machine outil ne le soit pas non plus, la profondeur des empreintes 2 à réaliser doit être précise, de l'ordre de quelques microns. Ainsi, pendant les différents mouvements combinés de l'outil 11, le cylindre 13 est toujours en appui sur la surface 3. Les défauts géométriques de cette surface 3 et/ou des défauts d'asservissement de la machine outil portant la broche 30 sont absorbés par la flexion de l'ensemble constitué par l'outil 11 et la machine outil.

Les éléments en saillie 15 de la couronne 14 étant réglés par rapport au cylindre de référence 13, toujours en appui sur la surface 3, la précision des empreintes 2 est ainsi assurée.

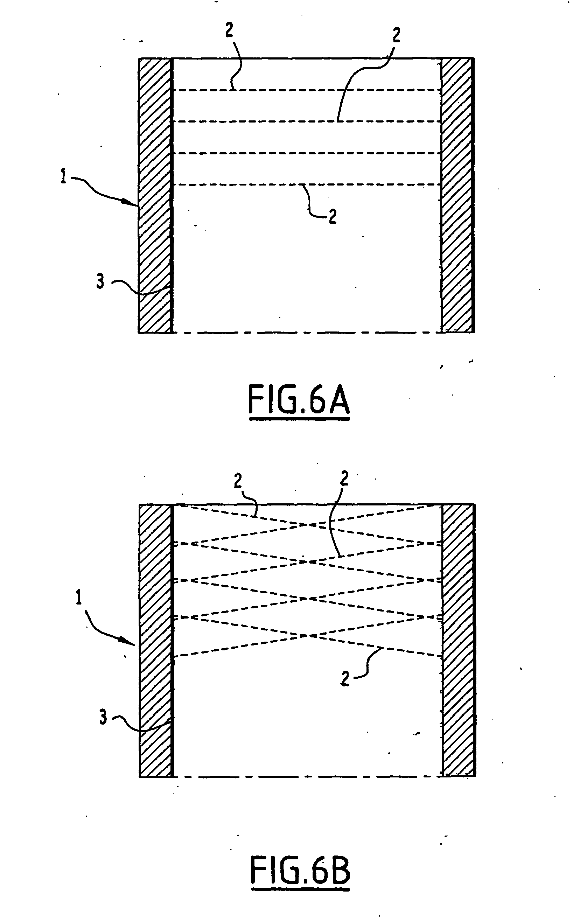

Ainsi que montré sur le schéma de la Fig. 5, l'outil 11 tourne sur lui-même selon la flèche "a" et son axe qui est parallèle à la surface 3, décrit aussi un cercle selon la flèche "b". La combinaison de ces deux déplacements "a" et "b" qui sont issus de la combinaison de deux mouvements de la broche 30 de la machine outil permet de réaliser les empreintes 2 par pression des parties actives 15a des éléments en saillie 15 de la couronne 14. L'association des mouvements "a" et "b" assure une vitesse linéaire nulle au point de contact entre l'outil 11 et la surface 3 de la pièce 1.

L'outil 11 est également déplaçable selon un troisième mouvement indiqué par la flèche "c" sur la Fig. 1 qui est parallèle au plan de la surface 3 dans le cas d'une surface plane ou qui est parallèle à l'axe du cylindre dans le cas d'une surface 3 cylindrique.

La combinaison des mouvements "a" et "b" permet de réaliser, comme représenté à la Fig. 6A, une succession de niveaux d'empreintes 2 avec un déplacement vertical de l'outil 11 entre chaque niveau afin d'obtenir des stries parallèles.

La combinaison des mouvements "a", "b" et "c" permet de réaliser, comme représenté à la Fig. 6B, des empreintes 2 réparties selon des stries parallèles et hélicoïdales.

De préférence, les éléments en saillie 15 sont répartis de manière uniforme sur la face externe de la couronne 14.

Le dispositif selon l'invention présente l'avantage d'être d'une mise en oeuvre simple et donc de réduire les coûts, en obtenant des temps de cycle performants compatibles avec une production de pièces en grande série.

## Revendications

1. Dispositif de formation d'empreintes en creux (2) de faible profondeur sur une surface (3) d'une pièce (1), **caractérisé en ce qu'**il comprend un outil (11) cylindrique formé par un corps (12) comportant :
- un cylindre (13) de référence destiné à être appliqué sur la surface (3),
- une couronne (14) coaxiale audit cylindre (13) et munie, sur sa face externe, d'une série d'éléments en saillie (15) comprenant chacune une partie active (15a) de forme complémentaire aux empreintes en creux (2), et
- un organe de liaison (16) avec des moyens de déplacement de l'outil (11) le long de la surface (3), des moyens d'entraînement en rotation de cet outil (11) et des moyens de déplacement vertical dudit outil (11).

2. Dispositif selon la revendication 1, **caractérisé en ce que** la couronne (14) est solidaire du corps (12) de l'outil (11).

3. Dispositif selon la revendication 1, **caractérisé en ce que** la couronne (14) est indépendante du corps (12) de l'outil (11) et montée libre en rotation sur ledit corps (12).

4. Dispositif selon l'une quelconque des revendications 1 à 3, **caractérisé en ce que** les éléments en saillie (15) forment avec la couronne (14) une pièce monobloc.

5. Dispositif selon l'une quelconque des revendications 1 à 3, **caractérisé en ce que** les éléments en saillie (15) sont formés par des plaquettes (17) amovibles et indépendantes de la couronne (14) et disposées chacune dans un logement (18) ménagé dans ladite couronne (14).

6. Dispositif selon la revendication 5, **caractérisé en ce que** chaque plaquette (17) est déplaçable radialement dans le logement (18) correspondant au moyen d'un système de réglage.

7. Dispositif selon l'une quelconque des revendications 1 à 3, **caractérisé en ce que** les éléments en saillie (15) sont fixés sur la face externe de la couronne (14) par exemple en soudage ou par brasage.

8. Dispositif selon la revendication 7, **caractérisé en ce que** la couronne (14) est expansible radialement à l'aide d'un mécanisme comportant un cône (20) concentrique à ladite couronne (14) et déplaçable verticalement par un système vis/écrou.

9. Dispositif selon l'une quelconque des revendications précédentes, **caractérisé en ce que** les éléments en saillie (15) sont uniformément répartis à la périphérie de la couronne (14).

10. Dispositif selon l'une quelconque des revendications précédentes, **caractérisé en ce que** la couronne (14) et/ou les éléments en saillie (15) sont réalisés en acier rapide ou en carbure de tungstène ou en céramique ou en nitrure de bore ou en diamant.

11. Dispositif selon l'une quelconque des revendications précédentes, **caractérisé en ce que** les moyens de déplacement et d'entraînement en rotation de l'outil (11) comprennent une broche (30) d'une machine outil reliée à l'organe de liaison (16) du corps (12) de cet outil (11).

12. Dispositif selon l'une quelconque des revendications précédentes, **caractérisé en ce que** la surface (3) de la pièce (1) est formée par un alésage d'une chemise d'un cylindre d'un moteur à combustion.

13. Dispositif selon l'une quelconque des revendications précédentes, **caractérisé en ce que** les empreintes en creux (2) formées par la partie active (15a) des éléments en saillie (15) ont une profondeur comprise entre 10 e 15 microns ±10%.

## Claims

1. Device for forming shallow hollow impressions (2) on a surface (3) of a part (1), **characterised in that** it comprises a cylindrical tool (11) formed by a body (12) comprising:
- a reference cylinder (13) intended for application to the surface (3),
- a ring (14) coaxial with said cylinder (13) and provided, on its external surface, with a series of projecting elements (15) each comprising an active part (15a) of a shape complementary to the hollow impressions (2), and
- a connecting member (16) having means for displacement of the tool (11) along the surface (3), means for driving said tool (11) in rotation and means for vertical displacement of said tool (11).

2. Device according to claim 1, **characterised in that** the ring (14) is fixed to the body (12) of the tool (11).

3. Device according to claim 1, **characterised in that** the ring (14) is independent of the body (12) of the tool (11) and mounted so as to be capable of rotating freely on said body (12).

4. Device according to any one of claims 1 to 3, **characterised in that** the projecting elements (15) form an integral part with the ring (14).

5. Device according to any one of claims 1 to 3, **characterised in that** the projecting elements (15) are formed by small movable plates (17) which are independent of the ring (14) and each of which is arranged in a recess (18) formed in said ring (14).

6. Device according to claim 5, **characterised in that** each small plate (17) is radially displaceable in the corresponding recess (18) by means of an adjustment system.

7. Device according to any one of claims 1 to 3, **characterised in that** the projecting elements (15) are fixed on the outer face of the ring, for example by welding or brazing.

8. Device according to claim 7, **characterised in that** the ring (14) is radially expandable with the aid of a mechanism comprising a cone (20) which is concentric with said ring (14) and which is vertically displaceable by means of a screw-and-nut system.

9. Device according to any one of the preceding claims, **characterised in that** the projecting elements (15) are uniformly distributed on the periphery of the ring (14).

10. Device according to any one of the preceding claims, **characterised in that** the ring (14) and/or the projecting elements (15) are made of high-speed steel or of tungsten carbide or of ceramic or of boron nitride or of diamond.

11. Device according to any one of the preceding claims, **characterised in that** the means for displacement of the tool (11) and for driving it in rotation comprise a shaft (30) of a machine tool connected to the connecting member (16) of the body (12) of said tool (11).

12. Device according to any one of the preceding claims, **characterised in that** a bore of a liner of a cylinder of a combustion engine forms the surface (3) of the part (1).

13. Device according to any one of the preceding claims, **characterised in that** the hollow impressions (2) formed by the active part (15a) of the projecting elements (15) have a depth between 10 and 15 microns ± 10 %, inclusive.

## Patentansprüche

1. Vorrichtung zum Formen von Vertiefungen (2) geringer Tiefe auf einer Fläche (3) eines Bauteils (1), **dadurch gekennzeichnet, dass** sie ein von einem Körper (12) gebildetes zylindrisches Werkzeug (11) aufweist, das enthält:
- einen Bezugszylinder (13), der dazu bestimmt ist, auf die Fläche (3) aufgebracht zu werden,
- einen zum Zylinder (13) koaxialen Kranz (14), der auf seiner Außenseite mit einer Reihe von vorstehenden Elementen (15) versehen ist, die jeweils einen aktiven Teil (15a) mit einer zu den Vertiefungen (2) komplementären Form aufweisen, und
- ein Verbindungsorgan (16) mit Mitteln zur Verschiebung des Werkzeugs (11) entlang der Fläche (3), mit Mitteln für den Drehantrieb. dieses Werkzeugs (11) und mit Mitteln zur senkrechten Verschiebung des Werkzeugs (11).

2. Vorrichtung nach Anspruch 1, **dadurch gekennzeichnet, dass** der Kranz (14) fest mit dem Körper (12) des Werkzeugs (11) verbunden ist.

3. Vorrichtung nach Anspruch 1, **dadurch gekennzeichnet, dass** der Kranz (14) vom Körper (12) des Werkzeugs (11) unabhängig und frei drehend an dem Körper (12) montiert ist.

4. Vorrichtung nach einem der Ansprüche 1 bis 3, **dadurch gekennzeichnet, dass** die vorstehenden Elemente (15) mit dem Kranz (14) ein einstückiges Bauteil bilden.

5. Vorrichtung nach einem der Ansprüche 1 bis 3, **dadurch gekennzeichnet, dass** die vorstehenden Elemente (15) von Plättchen (17) gebildet werden, die vom Kranz (14) lösbar und unabhängig und jeweils in einem in dem Kranz (14) ausgebildeten Sitz (18) angeordnet sind.

6. Vorrichtung nach Anspruch 5, **dadurch gekennzeichnet, dass** jedes Plättchen (17) mittels eines Regelsystems in dem entsprechenden Sitz (18) radial verschiebbar ist.

7. Vorrichtung nach einem der Ansprüche 1 bis 3, **dadurch gekennzeichnet, dass** die vorstehenden Elemente (15) an der Außenseite des Kranzes (14) zum Beispiel durch Schweißen oder Löten befestigt sind.

8. Vorrichtung nach Anspruch 7, **dadurch gekennzeichnet, dass** der Kranz (14) mit Hilfe eines Mechanismus radial dehnbar ist, der einen zum Kranz (14) konzentrischen und senkrecht über ein Schraube/Mutter-System verschiebbaren Konus (19) aufweist.

9. Vorrichtung nach einem der vorhergehenden Ansprüche, **dadurch gekennzeichnet, dass** die vorstehenden Elemente (15) am Umfang des Kranzes (14) gleichmäßig verteilt sind.

10. Vorrichtung nach einem der vorhergehenden Ansprüche, **dadurch gekennzeichnet, dass** der Kranz (14) und/oder die vorstehenden Elemente (15) aus Schnellstahl oder aus Wolframkarbid oder aus Keramikmaterial oder aus Bornitrid oder aus Diamant hergestellt sind.

11. Vorrichtung nach einem der vorhergehenden Ansprüche, **dadurch gekennzeichnet, dass** die Verschiebungs- und Drehantriebsmittel des Werkzeugs (11) eine Spindel (30) einer Werkzeugmaschine aufweisen, die mit dem Verbindungsorgan (16) des Körpers (12) dieses Werkzeugs (11) verbunden ist.

12. Vorrichtung nach einem der vorhergehenden Ansprüche, **dadurch gekennzeichnet, dass** die Fläche (3) des Bauteils (1) von einer Bohrung einer Zylinderbüchse eines Verbrennungsmotors gebildet wird.

13. Vorrichtung nach einem der vorhergehenden Ansprüche, **dadurch gekennzeichnet, dass** die von dem aktiven Teil (15a) der vorstehenden Elemente (15) geformten Vertiefungen (2) eine Tiefe zwischen 10 und 15 Mikron ± 10% haben.
